# EUROPÄISCHE PATENTSCHRIFT

(11) **EP 0 440 580 B1**
(45) Veröffentlichungstag und Bekanntmachung des Hinweises auf die Patenterteilung: **08.03.1995**
(21) Anmeldenummer: 91810047.0
(22) Anmeldetag: 21.01.1991
(51) Int. Cl.: C09D 5/00, C09D 7/12, B05D 7/06

(54) **Holzschutzanstrich**
Wood protecting paint
Peinture de protection du bois

(30) Priorität: 29.01.1990 CH 265/90
(43) Veröffentlichungstag der Anmeldung: 07.08.1991
(73) Patentinhaber: CIBA-GEIGY AG, 4002 Basel (CH)
(72) Erfinder: Valet, Andreas, Dr., W-7859 Eimeldingen (DE); Rogez, Daniel, Dr., F-68100 Mulhouse (FR); Tiefenauer, Rolf, CH-4058 Basel (CH)

(56) Entgegenhaltungen:
- GB-A- 1 419 768
- US-A- 3 285 855
- DATABASE WPIL, Accession Nr. 84-203744 [33], Derwent Publications Ltd, London, GB

## Beschreibung

Gegenstand der Erfindung ist ein Verfahren zum Schützen von Holzoberflächen gegen Schädigung durch Licht sowie ein Schutzanstrich für Holz.

Holzoberflächen, die intensivem Sonnenlicht ausgesetzt sind, werden vor allem durch das im Sonnenlicht enthaltene UV-Licht geschädigt. Die polymeren Bestandteile des Holzes werden abgebaut, dadurch kommt es zu einer Aufrauhung und Verfärbung der Oberfläche. In der Folge tritt als weitere Schädigung ein Befall durch Mikrooganismen, insbesondere durch Pilze, ein.

Die übliche Methode, Holz gegen Lichtschädigung zu schützen, ohne auf das optische Bild der Holzoberfläche zu verzichten, ist das Ueberziehen mit einem farblosen Lack, der ein Lichtschutzmittel, insbesondere einen UV-Absorber, enthält. Es wurde auch schon untersucht, ob die zusätzliche Zugabe eines Antioxidans den Effekt des Lichtschutzmittels im Holzanstrich verstärkt. Gemäss D.N.S. Hon et al., J. Appl. Polymer Sci. 30 (1985), 1439, tritt dabei kein Effekt oder nur ein geringer Effekt auf. In der GB-A-1 419 768 wird die Herstellüng von üngeschäumten Polyürethanen beschrieben, wobei sterisch gehinderte Phenole als Antioxidantien zügegeben werden.

Der Zusatz von phenolischen Antioxidanaen zu Holzlacken ist bekannt, z.B. beschreibt die US-A-3,285,855 die Farbstabilisierung von Möbelfirnissen auf der Basis von säurehärtbaren Harnstoff-Formaldehyd-Alkydharzen durch Zusatz von 0,2 Gew.-% eines phenolischen Antioxidans. In der JP-A-59/115805 werden Holzschutzlacke beschrieben, die einen UV-Absorber, ein Antioxidans und ein Insektizid enthalten.

Es wurde nun gefunden, dass Antioxidantien vom Typ der sterisch gehinderten Phenole eine deutliche Stabilisatorwirkung gegen den Einfluss von Licht zeigen, wenn sie ohne Zusatz eines Lichtschutzmittels in einem die Holzoberfläche penetrierenden Grundanstrich appliziert werden und das Holz anschliessend mit einem Deckanstrich versehen wird, wobei der Deckanstrich ein Lichtschutzmittel enthalten kann.

Gegenstand der Erfindung ist ein Verfahren zum Schützen von Holzoberflächen gegen Schädigung durch Licht durch Behandlung mit
a) einem die Holzoberfläche penetrierenden Grundanstrich, der kein Lichtschutzmittel enthält, und
b) einem oder mehreren Deckanstrichen,
dadurch gekennzeichnet, dass der Grundanstrich mindestens 0,05 bis 10 Gew.-% eines Antioxidans enthält, welches mindestens eine Gruppe der Formel I enthält, 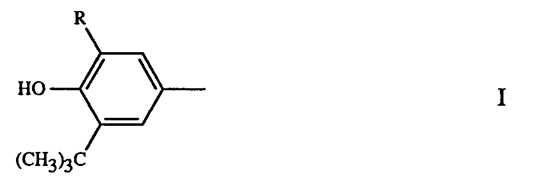
worin R Wasserstoff, Methyl oder tert.Butyl bedeutet.

Bevorzugt ist das Antioxidans ein Ester der
β-(3,5-Di-tert.butyl-4-hydroxyphenyl)-propionsäure, insbesondere eine Verbindung der Formel II, 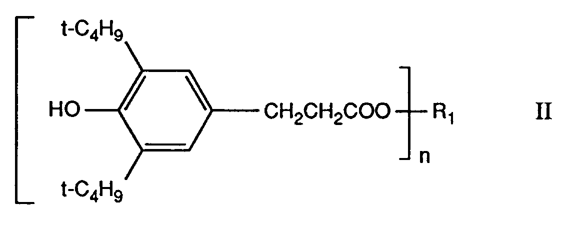
worin n 1, 2 oder 4 ist und wenn n = 1 ist, R₁ C₈H₁₇ bedeutet, und wenn n = 2 ist, R₁ -(CH₂)₆- oder -CH₂CH₂OCH₂CH₂OCH₂CH₂- bedeutet, und wenn n = 4 ist, R₁ (̵CH₂)₄C bedeutet.

Bevorzugt ist ferner das Antioxidans eine Verbindung der Formel III, 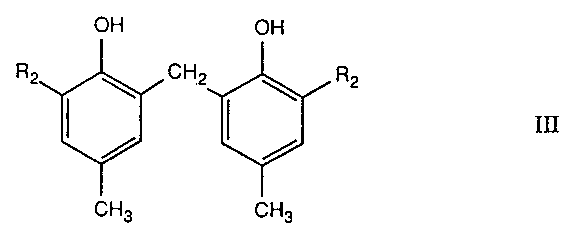
worin R₂ Wasserstoff, Methyl oder tert.Butyl bedeutet, insbesondere worin R₂ tert.Butyl bedeutet.

Bevorzugt ist ferner das Antioxidans eine Verbindung der Formel IV, 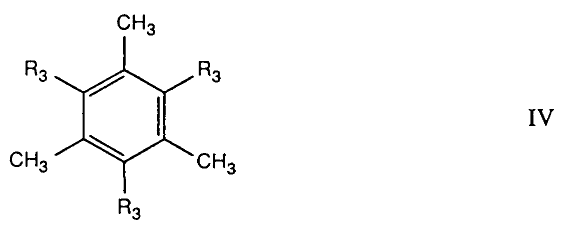
worin R₃ eine Gruppe 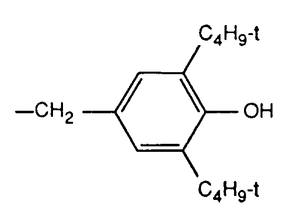
bedeutet.

Bevorzugt ist ferner das Antioxidans eine Verbindung der Formel V, 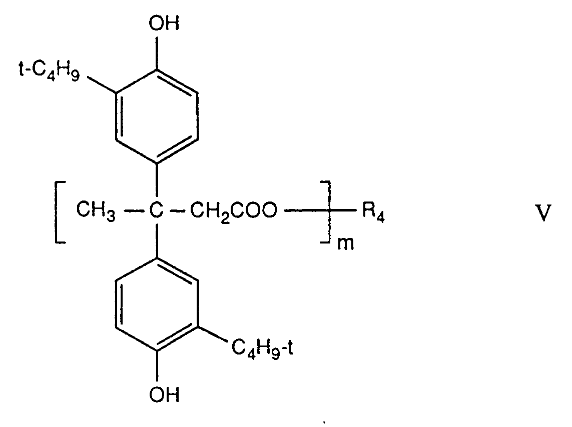
worin entweder m 1 ist und R₄ Methyl ist oder m 2 ist und R₄ -CH₂CH₂- bedeutet.

Bevorzugt ist ferner das Antioxidans eine Verbindung der Formel VI, 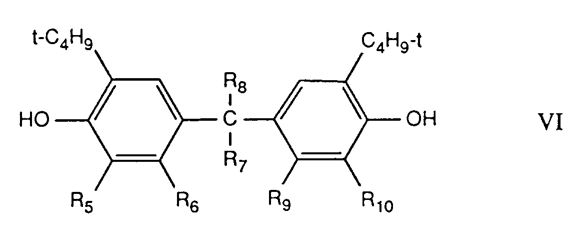
worin R₅ und R₁₀ Wasserstoff oder tert.Butyl sind, R₆ und R₉ Wasserstoff oder Methyl sind, R₇ Wasserstoff oder Methyl und R₈ Wasserstoff oder C₁-C₄-Alkyl sind.

Bevorzugt ist ferner das Antioxidans 3,5-Di-tert.butyl-4-hydroxytoluol.

Beispiele für erfindungsgemäss verwendbare Antioxidantien sind die folgenden Verbindungen:
1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
2. Alkylierte Hydrochinone, z.B. 2,6-Di-tert.butyl-4-methoxyphenol, 2,5-Di-tert.butylhydrochinon, 2,5-Di-tert.amyl-hydrochinon, 2,6-Diphenyl-4-octadecyloxyphenol.
3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis -(4,6-di-tert.butylphenol), 2,2'-Ethyliden-bis-(6-tert.butyl-4-isobutylphenol), 2,2'-Methylen-bis-[6-(α-ethylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.-butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.
5. Benzylverbindungen, z.B. 1,3,5-Tris-(3,5-di-tert.butyl-4-hydroxy-benzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino )-s-triazin, N-(3,5-di-tert.-butyl-4-hydroxyphenyl)-carbaminsäureoctylester.
7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

In bestimmten Fällen kann es von Vorteil sein, zwei oder mehrere solche Antioxidantien zu verwenden.

Der Grundanstrich soll in die Holzoberfläche eindringen, er soll deshalb von relativ niedriger Viskosität sein. Im einfachsten Fall dient als Grundanstrich eine Lösung des Antioxidans in einem organischen Lösungsmittel. Beispiele für hierfür brauchbare Lösungsmittel sind aliphatische Kohlenwasserstoffe wie z.B. bestimmte Fraktionen von Benzin. Weitere Beispiele für Lösungsmittel sind aromatische Kohlenwasserstoffe, wie z.B. Toluol oder Xylol; Alkohole, wie z.B. Methanol, Ethanol, Isopropanol oder Butanol; Ester, wie z.B. Ethylacetat oder Butylacetat; oder Ketone, wie z.B. Aceton, Methylethylketon oder Methyl-isobutyl-keton. Diese Lösungsmittel verdampfen bei Raumtemperatur und bleiben daher nicht im Holz. Man kann aber auch hochsiedende Flüssigkeiten zusetzen, die im Holz bleiben, wie z.B. höhere Alkanole, Glykole, Glykolether, Glykolester oder Polyglykole. Der Grundanstrich kann auch ein Bindemittel enthalten, wie sie für Holzanstriche üblich sind. Das können z.B. Alkydharze und modifizierte Alkydharze sein, selbstvernetzende oder fremdvernetzende Acrylharze, Polyesterharze, trocknende Oele, Phenolharze, Nitrocellulose oder Mischungen davon.

Der Grundanstrich kann auch einen oder mehrere Phosphorigsäureester enthalten, welche die Wirkung der Antioxidantien synergistisch verstärken können. Beispiele für solche Phosphorigsäureester sind:
Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diiscdecylpentaerythrit-diphosphit, Bis-(2,4-di-tert.butylphenyl)pentaerythritdiphosphit, Tristearyl-sorbit-triphosphit. Besonders bevorzugt ist das Tris-(2,4-di-tert.butylphenyl)-phosphit.

Der Grundanstrich kann auch Konservierungsmittel, z.B. Fungizide oder Insektizide enthalten. Beispiele für verwendbare Fungizide sind Tributylzinnoxid, Phenylquecksilbersalze, Kupfemaphthenat, 1-Chlornaphthalin oder Pentachlorphenol. Beispiele für verwendbare Insektizide sind DDT, Dieldrin, Lindan, Parathion oder Phoxim.

Weitere Zusätze, die im Grundanstrich enthalten sein können, sind Härtungsbeschleuniger (Trockner) für die Bindemittel, Farbstoffe oder auch Pigmente in geringer Menge.

Der Grundanstrich besteht in der Hauptmenge aus dem Lösungsmittel und enthält 0,05 bis 10 Gew.-%, vorzugsweise 0,1 bis 5 Gew.-% des Antioxidans. Er kann ausserdem 0,1 bis 5 Gew.-% eines Phosphorigsäureesters enthalten.

Der Grundanstrich kann auf das Holz nach den hierfür üblichen Methoden aufgebracht werden, beispielsweise durch Tauchen, Streichen oder Besprühen.

Der Grundanstrich kann auch ein wässriger Anstrich sein. Anstelle des organischen Lösungsmittels treten dann als Vehikel Wasser oder Mischungen von Wasser und einem wasserlöslichen organischen Lösungsmittel. Das Antioxidans und die anderen Inhaltsstoffe können in diesem Vehikel gelöst oder dispergiert sein.

Als Deckanstrich kann jeder für die Lackierung von Holz geeignete Lack verwendet werden. Er enthält meist ein Bindemittel, gelöst oder dispergiert in einem organischen Lösungsmittel oder in Wasser oder in einem Wasser/Lösungsmittel-Gemisch. Das Bindemittel kann z.B. ein lufttrocknendes bzw. bei Raumtemperatur härtbares Lackharz sein. Beispiele hierfür sind Nitrocellulose, Polyvinylacetat, Polyvinylchlorid, ungesättigte Polyesterharze, Polyacrylate, Polyurethane, Epoxidharze, Phenolharze, insbesondere aber Alkydharze. Das Bindemittel kann auch ein Gemisch verschiedener Lackharze sein.

Soweit es sich um härtbare Bindemittel handelt, werden sie meist zusammen mit einem Härter und/oder einem Härtungsbeschleuniger eingesetzt.

Als organische Lösungsmittel können die für Lacke üblichen Lösungsmittel verwendet werden, z.B. aliphatische, aromatische oder cycloaliphatische Kohlenwasserstoffe, Alkohole, Ester, Ketone oder Chlorkohlenwasserstoffe.

Wasser/Lösungsmittel-Gemische sind z.B. Gemische von Wasser mit niedrigen Alkoholen, Glykolen oder Glykolethern.

Der Deckanstrich kann auch eine durch Strahlung härtbare lösungsmittelfreie Zusammensetzung von photopolymerisierbaren Verbindungen sein. Beispiele hierfür sind Gemische von Acrylaten bzw. Methacrylaten, ungesättigte Polyester/Styrol-Gemische oder Gemische sonstiger ethylenisch ungesättigter Monomeren bzw. Oligomeren.

Der Deckanstrich kann einen löslichen Farbstoff und/oder ein Pigment und/oder einen Füllstoff enthalten. Das Pigment kann ein organisches, anorganisches oder metallisches Pigment sein. Der Füllstoff kann z.B. Talk, Kaolin, Calciumcarbonat oder Aluminiumsilicat sein. Vorzugsweise ist der Deckanstrich ein Klarlack, das heisst, er enthält keine ungelösten Bestandteile.

Obwohl der das Antioxidans enthaltende Grundanstrich bereits einen guten Lichtschutz bewirkt, ist es vorteilhaft, dem Deckanstrich ein Lichtschutzmittel zuzusetzen. Beispiele für geeignete Lichtschutzmittel sind die folgenden Verbindungen:
1. 2-(2'-Hydroxyphenyl)-benztriazole, wie z.B. das 5'-Methyl-, 3',5'-Di-tert.butyl-, 5'-tert.-Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3'-sec.Dodecyl-5'-methyl-, 3',5'-Bis-(α,α-dimethylbenzyl)-Derivat, der Octylester der 3-(5-Chlorbenztriazol-2-yl)-4-hydroxy-5-tert.butylphenylpropionsäure oder Polyethylenglykol-300-ester der 3-(Benztriazol-2-yl)-4-hydroxy-5-tert.butylphenylpropionsäure.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch behinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).
7. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

Bevorzugt sind dabei Lichtschutzmittel aus den Klassen 1, 6 und 8.

Besonders wirkungsvoll ist der Zusatz eines Gemisches eines UV-Absorbers, wie z.B. einer Verbindung der oben angegebenen Klassen 1, 2, 3, 4, 7 und 8, bevorzugt 1 und 8, mit einem sterisch gehinderten Amin, wie z.B. einer Verbindung der oben angegebenen Klasse 6.

Die Menge des zugesetzten Lichtschutzmittels bzw. der Summe der zugesetzen Lichtschutzmittel beträgt vorzugsweise 0,1 bis 5 Gew.-%, bezogen auf den Feststoffgehalt des Deckanstriches.

Der Deckanstrich kann weiter in der Lacktechnolgie übliche Zusätze enthalten, wie z.B. Verlaufhilfsmittel, Thioxotropiemittel, Flammschutzmittel, Antioxidantien oder lösliche Farbstoffe.

Die Applikation des Deckanstriches erfolgt nach den üblichen Methoden der Holzlackierung, sie kann z.B. durch Streichen, Besprühen oder Tauchen geschehen.

Der Deckanstrich kann in mehreren Anstrichen aufgetragen werden, damit er eine genügende Schichtdicke erhält. Es hängt von dem beabsichtigen Verwendungszeck ab, wie dick der Deckanstrich sein soll.

Die folgenden Beispiele zeigen die Ausführung der Erfindung im Detail. Darin bedeuten Teile Gewichtsteile und % Gewichts-%.

In den Beispielen werden die folgenden Stabilisatoren verwendet:
- AO-1: Octadecyl-β-(3,5-di-tert.butyl-4-hydroxyphenyl)-propionat
- AO-2: β-(3,5-Di-tert.butyl-4-hydroxyphenyl)-propionat des Pentaerythrits
- AO-3: Di-[β-(3,5-Di-tert.butyl-4-hydroxyphenyl)-propionat] des Triethylenglykols
- AO-4: 2,4,6-Tris-(3,5-di-tert.butyl-4-hydroxybenzyl)-1,3,5-trimethylbenzol
- AO-5: Di-[β-bis(3-tert.butyl-4-hydroxyphenyl)-butyrat] des Ethylenglykols
- AO-6: Bis(2-hydroxy-3-tert.butyl-5-methylphenyl)-methan
- LS-1: β-[3-(Benztriazol-2-yl)-4-hydroxy-5-tert.butylphenyl]-propionat des Polyethylenglykol 300
- LS-2: Di-(1,2,2,6,6-pentamethylpiperid-4-yl)-sebacat
- P-1: Tris(2,4-di-tert.butylphenyl)-phosphit

### Beispiel 1

Ein Grundanstrich wird bereitet aus
27 Teilen eines Alkydharzes (Jägalyd Antihydro®, E. Jäger KG, 60%ige Lösung in Testbenzin)
1 Teil eines Härtungskatalysators (Antihydro Trockner, E. Jäger KG)
3 Teile 2-Ethoxyethanol
0,5 Teile eines Hautverhinderungsmittels (Ascinin® P, Bayer AG)
1,3 Teile eines Konservierungsmittels (Traetex® 293, Acima AG)
67,2 Teile Testbenzin.

Dieser Grundanstrich hat einen Festkörpergehalt von ca 17 %.
Dazu gibt man die in der Tabelle 1 aufgeführten Antioxidantien, jeweils in 10 Teilen Xylol gelöst.

Der Grundanstrich wird mit einem Pinsel auf Fichtenholzbretter (30x10x1,5 cm) aufgetragen und 24 h bei Raumtemperatur getrocknet.

Als Deckanstrich wird eine Dickschichtlasur auf Alkydharzbasis der folgenden Zusammensetzung verwendet:
53 Teile eines Alkydharzes als 60%ige Lösung in Testbenzin (Jägalyd® Antihydro)
11 Teile eines Thixotropiemittels als 50%ige Lösung in Testbenzin (Jägalyd® Antihydro Thix N)
1,9 Teile eines Härtungskatalysators (Jäger-Antihydrotrockner)
33,4 Teile Testbenzin K 60
0,3 Teile eines Hautverhinderungsmittels (Ascinin® P, Bayer AG)
0,4 Teile eines Konservierungsmittels (Exkin® II, Servo BV)
Diese Lasur enthält kein Pigment und enthält ca 38 % Festkörper (Bindemittel). Soweit dem Deckanstrich Lichtschutzmittel zugesetzt werden, werden diese in wenig Xylol vorgelöst.

Der Deckanstrich wird auf die grundierten Bretter mit einem Pinsel in drei Anstrichen aufgetragen. Zwischen jedem Auftrag lässt man die Probe 24 h bei Raumtemperatur trocknen.

Die so bereiteten Proben werden in der Nähe von Zürich unter 45° Süd im Freien bewittert. Nach 11 Monaten wird der Oberflächenglanz und die von Pilzen befallene Fläche gemessen.

**Tabelle 1**

| Antioxidans im Grundanstrich¹⁾ | Lichtschutzmittel im Deckanstrich¹⁾ | 60°-Glanz | von Pilzen befallene Fläche |
|---|---|---|---|
| Keines | Keines | nicht mehr messbar | 100 % |
| Keines | 1 % LS-1 | 40 % | 70 % |
| | 1 % LS-2 | | |
| 1 % AO-1 | Keines | 73 % | 20 % |
| 1 % AO-1 | 1 % LS-1 | 73 % | 5 % |
| | 1 % LS-2 | | |

| | | | |
|---|---|---|---|
| 1) Menge bezogen auf den Festkörpergehalt des Anstriches | | | |

### Beispiel 2

Ein Grundanstrich (Imprägnierung) wird bereitet aus
2 Teilen eines Alkydharzes (Jägalyd® Antihydro, 60%ige Lösung in Testbenzin)
1 Teil Härtungskatalysator (Jägalyd® Antihydrotrockner)
3 Teile 2-Ethoxyethanol
0,2 Teile eines Hautverhinderungsmittels (Luactim® M, BASF AG)
1,3 Teile eines Konservierungsmittels (Traetex® 293, Acima AG)
52,5 Teilen Testbenzin
15 Teilen Xylol.

Dieser Grundanstrich hat einen Festkörpergehalt von ca 17 %.
Dazu gibt man die in der Tabelle 2 angegebenen Antioxidantien, in einer Menge von 1 %, bezogen auf Festkörper (= 0,17 Teile bezogen auf den Anstrich).

Der Grundanstrich wird mit einem Pinsel auf Fichtenholzbretter aufgetragen und 24 h bei Raumtemperatur getrocknet. Als Deckanstrich wird die in Beispiel 1 beschriebene Dickschichtlasur verwendet und wird wie in Beispiel 1 in 3 Pinselanstrichen aufgetragen.

Die Proben werden 4,5 Monate in Basel unter 45° Süd im Freien bewittert. Vor und nach der Bewitterung wird der Yellowness-Index (YI) der Probenoberfläche nach ASTM D 1925 gemessen. In Tabelle 2 ist die Zunahme des YI bei der Bewitterung angegeben.

**Tabelle 2**

| Antioxidans im Grundanstrich *) | Zunahme des YI nach 4,5 Monaten Bewitterung |
|---|---|
| keines | 38,5 |
| 1 % AO-2 | 32,5 |
| 1 % AO-3 | 33,2 |
| 0,5 % AO-2 + 0,5 % P-1 | 34,2 |
| 0,5 % AO-4 + 0,5 % P-1 | 35,2 |

| | |
|---|---|
| *) Menge bezogen auf den Festkörpergehalt des Grundanstriches | |

### Beispiel 3

Als Grundanstrich (Imprägnierung) wird eine 0,5 %ige Lösung des Antioxidans in Xylol verwendet. Diese wird zweimal mit dem Pinsel auf das Holz aufgetragen und dann die Proben 24 h bei Raumtemperatur getrocknet

Als Deckanstrich wird die in Beispiel 1 beschriebene Dickschichtlasur verwendet und wird wie in Beispiel 1 aufgetragen.

Die Proben werden 4,5 Monate in Basel unter 45° Süd im Freien bewittert. Gemessen wird der Yellowness-Index (YI) vor und nach der Bewitterung.

**Tabelle 3**

| Antioxidans in der Grundierung | Zunahme des YI nach 4,5 Monaten |
|---|---|
| keines | 37,1 |
| AO-2 | 32,8 |
| AO-5 | 34,8 |
| AO-6 | 33,4 |
| AO-4 + 0,5 % P-1 | 32,1 |

### Beispiel 4

Es werden die in Beispiel 1 beschriebenen Grund- und Deckanstriche verwendet und wie dort beschrieben auf Fichtenholzbretter aufgetragen.

Die Proben werden in einem Xenon-Schnellbewitterungsgerät (Zyklus: 102 min trockene Belichtung, 18 min Besprühung) bewittert. In bestimmten Zeitabständen wird der 60°-Glanz der Probenoberfläche nach DIN 67530 gemessen. Die Resultate sind in Tabelle 4 aufgeführt.

| Antioxidans im Grundanstrich *) | % Glanz nach Bewitterungszeit von | | | |
|---|---|---|---|---|
| | 262 h | 533 h | 1039 h | 1302 h |
| keines | 43 | 51 | 22 | 10 |
| 1 % AO-1 | 53 | 64 | 59 | 30 |
| 1 % AO-3 | 62 | 68 | 70 | 51 |

| | | | | |
|---|---|---|---|---|
| *) Menge bezogen auf den Fesekörpergehalt des Grundanstriches | | | | |

## Patentansprüche

1. Verfahren zum Schützen einer Holzoberfläche gegen Schädigung durch Licht durch Behandlung mit
a) einem die Holzoberfläche penetrierenden Grundanstrich, der kein Lichtschutzmittel enthält, und
b) einem oder mehreren Deckanstrichen,
dadurch gekennzeichnet, dass der Grundanstrich mindestens 0,05 bis 10 Gew.-% eines Antioxidans enthält, welches mindestens eine Gruppe der Formel I enthält, 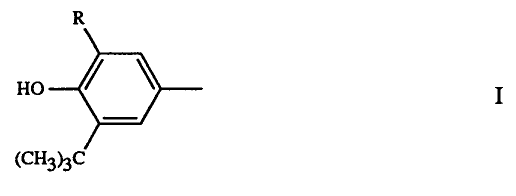 worin R Wasserstoff, Methyl oder tert.Butyl bedeutet.

2. Verfahren gemäss Anspruch 1, dadurch gekennzeichnet, dass das Antioxidans eine Gruppe der Formel I enthält, worin R tert.Butyl ist.

3. Verfahren gemäss Anspruch 1, dadurch gekennzeichnet, dass das Antioxidans ein Ester der β-(3,5-Di-tert.butyl-4-hydroxyphenyl)-propionsäure ist.

4. Verfahren gemäss Anspruch 3, dadurch gekennzeichnet, dass das Antioxidans eine Verbindung der Formel II ist, 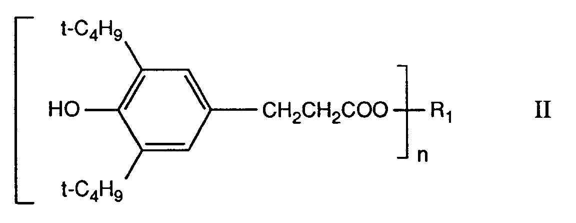 worin n 1, 2 oder 4 ist und wenn n = 1 ist, R₁ C₈H₁₇ bedeutet, und wenn n = 2 ist, R₁ -(CH₂)₆- oder -CH₂CH₂OCH₂CH₂OCH₂CH₂- bedeutet, und wenn n = 4 ist, R₁ (̵CH₂)₄C bedeutet.

5. Verfahren gemäss Anspruch 1, dadurch gekennzeichnet, dass das Antioxidans eine Verbindung der Formel III ist, 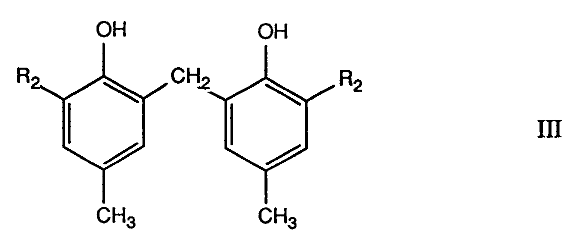 worin R₂ Wasserstoff, Methyl oder tert.Butyl bedeutet.

6. Verfahren gemäss Anspruch 5, worin R₂ tert.Butyl bedeutet.

7. Verfahren gemäss Anspruch 1, dadurch gekennzeichnet, dass das Antioxidans eine Verbindung der Formel IV ist, 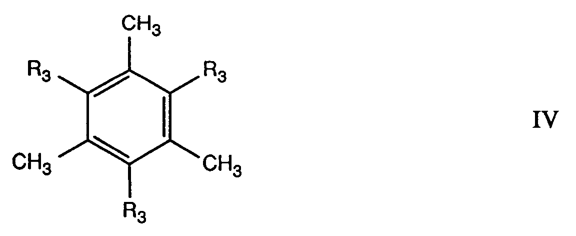 worin R₃ eine Gruppe 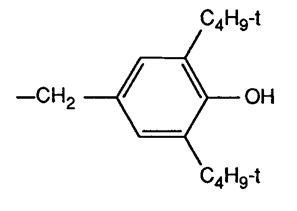 bedeutet.

8. Verfahren gemäss Anspruch 1, dadurch gekennzeichnet, dass das Antioxidans eine Verbindung der Formel V ist, 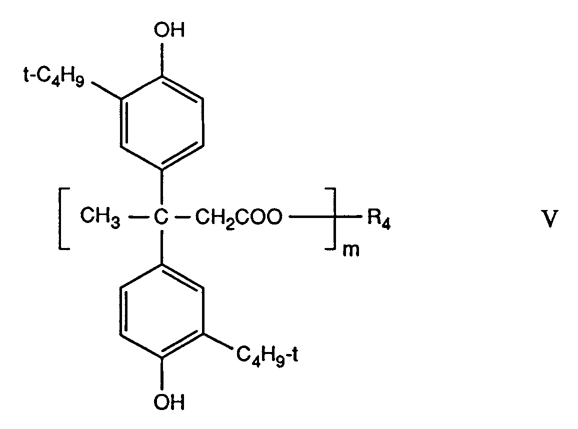 worin entweder m 1 ist und R₄ Methyl ist oder m 2 ist und R₄ -CH₂CH₂- bedeutet.

9. Verfahren gemäss Anspruch 1, dadurch gekennzeichnet, dass das Antioxidans eine Verbindung der Formel VI ist, 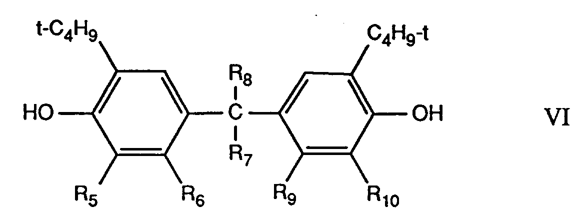 worin R₅ und R₁₀ Wasserstoff oder tert.Butyl sind, R₆ und R₉ Wasserstoff oder Methyl sind, R₇ Wasserstoff oder Methyl und R₈ Wasserstoff oder C₁-C₄-Alkyl sind.

10. Verfahren gemäss Anspruch 1, dadurch gekennzeichnet, dass das Antioxidans 3,5-Di-tert.butyl-4-hydroxytoluol ist.

11. Verfahren gemäss Anspruch 1, dadurch gekennzeichnet, dass der Grundanstrich ein Bindemittel und/oder eine hochsiedende Flüssigkeit enthält.

12. Verfahren gemäss Anspruch 1, dadurch gekennzeichnet, dass der Grundanstrich einen Phosphorigsäureester enthält.

13. Verfahren gemäss Anspruch 12, dadurch gekennzeichnet, dass der Grundanstrich Tris-(2,4-di-tert.butylphenyl)-phosphit enthält.

14. Verfahren gemäss Anspruch 1, dadurch gekennzeichnet, dass der Grundanstrich ein Konservierungsmittel enthält.

15. Verfahren gemäss Anspruch 1, dadurch gekennzeichnet, dass der Decklack ein Klarlack ist.

16. Verfahren gemäss Anspruch 1, dadurch gekennzeichnet, dass der Decklack ein Bindemittel auf Basis eines Alkydharzes enthält.

17. Verfahren gemäss Anspruch 1, dadurch gekennzeichnet, dass der Decklack ein oder mehrere Lichtschutzmittel enthält.

18. Verfahren gemäss Anspruch 17, dadurch gekennzeichnet, dass der Decklack einen UV-Absorber und ein sterisch gehindertes Amin als Lichtschutzmittel enthält.

19. Schutzanstrich für Holz, bestehend aus
a) einem die Holzoberfläche penetrierenden Grundanstrich, der kein Lichtschutzmittel enhält, und
b) einem oder mehreren Deckanstrichen,
dadurch gekennzeichnet, dass der Grundanstrich mindestens 0.05 bis 10 gew. % eines Antioxidans enthält, welches mindestens eine grüppe der Formel I enthält.

20. Schutzanstrich für Holz gemäss Anspruch 10, dadurch gekennzeichnet, dass der Grundanstrich eine Lösung eines phenolischen Antioxidans in einem organischen Lösungsmittel ist.

## Claims

1. A method of protecting a wood surface against light-induced degradation, by treatment with
a) an undercoat which penetrates the surface of the wood and which does not contain a light stabiliser, and
b) one or more topcoats,
wherein the undercoat contains at least 0.05 to 10 % by weight of an antioxidant which contains at least one group of formula I 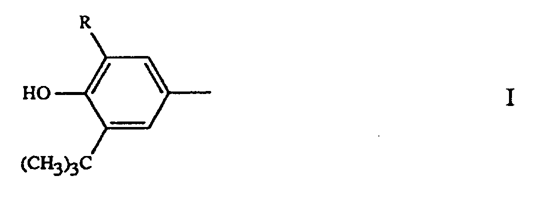 wherein R is hydrogen, methyl or tert-butyl.

2. A process according to claim 1, wherein the antioxidant contains a group of formula I wherein R is tert-butyl.

3. A process according to claim 1, wherein the antioxidant is an ester of β-(3,5-di-tert-butyl-4-hydroxyphenyl)propionic acid.

4. A process according to claim 3, wherein the antioxidant is a compound of formula II 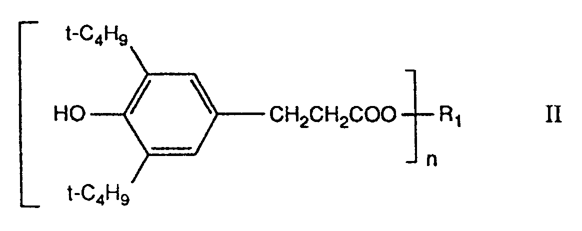 wherein n is 1, 2 or 4 and, when n = 1, R₁ is C₈H₁₇ and, when n = 2, R₁ is -(CH₂)₆- or -CH₂CH₂OCH₂CH₂OCH₂CH₂- and, when n = 4, R₁ is (̵ CH₂)₄C.

5. A process according to claim 1, wherein the antioxidant is a compound of formula III 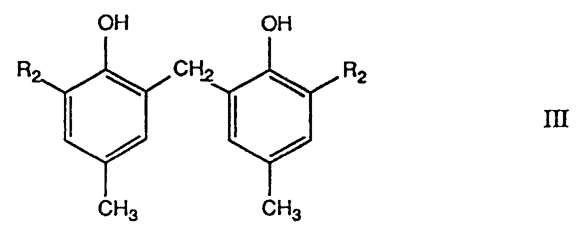 wherein R₂ is hydrogen, methyl or tert-butyl.

6. A process according to claim 5, wherein R₂ is tert-butyl.

7. A process according to claim 1, wherein the antioxidant is a compound of formula IV 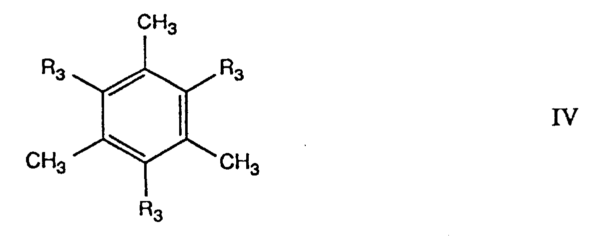 wherein R₃ is a group

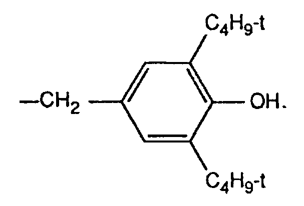

8. A process according to claim 1, wherein the antioxidant is a compound of formula V 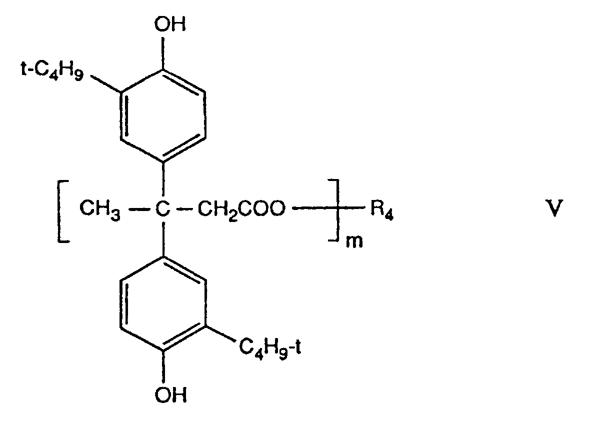 wherein either m is 1 and R₄ is methyl or m is 2 and R₄ is -CH₂CH₂-.

9. A process according to claim 1, wherein the antioxidant is a compound of formula VI 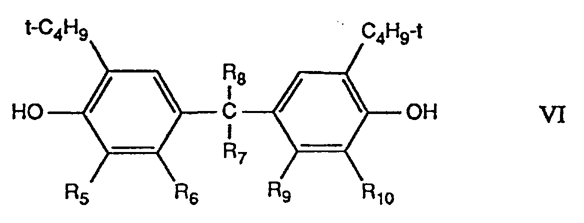 wherein R₅ and R₁₀ are hydrogen or tert-butyl, R₆ and R₉ are hydrogen or methyl, R₇ is hydrogen or methyl and R₈ is hydrogen or C₁-C₄alkyl.

10. A process according to claim 1, wherein the antioxidant is 3,5-di-tert-butyl-4-hydroxy-toluene.

11. A process according to claim 1, wherein the undercoat contains a binder and/or a high-boiling liquid.

12. A process according to claim 1, wherein the undercoat contains a phosphite.

13. A process according to claim 12, wherein the undercoat contains tris(2,4-di-tert-butylphenyl) phosphite.

14. A process according to claim 1, wherein the undercoat contains a preservative.

15. A process according to claim 1, wherein the topcoat is a clear varnish.

16. A process according to claim 1, wherein the topcoat contains a binder based on an alkyd resin.

17. A process according to claim 1, wherein the topcoat contains one or more light stabilisers.

18. A process according to claim 17, wherein the topcoat contains a UV absorber and a sterically hindered amine as light stabilisers.

19. A protective coating for wood, comprising
a) an undercoat which penetrates the surface of the wood and which does not contain a light stabiliser, and
b) one or more topcoats,
wherein the undercoat contains 0.05 to 10 % by weight of at least one antioxidant which contains at least one group of the formula I.

20. A protective coating for wood according to claim 10, wherein the undercoat is a solution of a phenolic antioxidant in an organic solvent.

## Revendications

1. Procédé pour la protection d'une surface du bois contre la dégradation induite par la lumière par traitement avec
a) une couche d'enduit primaire pénétrant la surface du bois, qui ne contient pas d'agent protecteur contre la lumière, et
b) une ou plusieurs couches protectrices,
caractérisé en ce que la couche protectrice contient au moins de 0,05 à 10 % en poids d'un anti-oxydant, qui contient au moins un groupe de formule I : 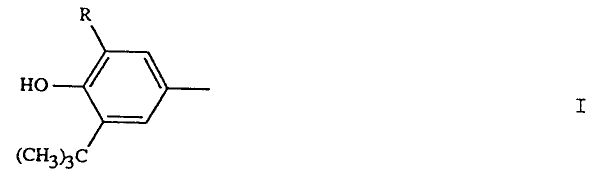 dans laquelle R représente l'hydrogène, le méthyle ou le tert.-butyle.

2. Procédé selon la revendication 1, caractérisé en ce que l'anti-oxydant contient un groupe de formule I dans laquelle R est le tert.-butyle.

3. Procédé selon la revendication 1, caractérisé en ce que l'anti-oxydant est un ester de l'acide β-(3,5-di-tert.-butyl-4-hydroxyphényl)-propionique.

4. Procédé selon la revendication 3, caractérisé en ce que l'anti-oxydant est un composé de formule II : 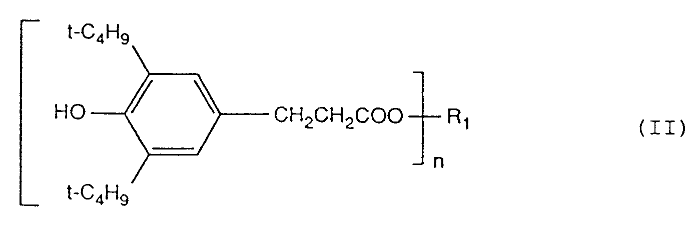 dans laquelle n vaut 1, 2 ou 4 et lorsque n = 1, R₁ signifie C₈H₁₇ et lorsque n = 2, R₁ signifie -(CH₂)₆- ou -CH₂CH₂OCH₂CH₂OCH₂CH₂- et lorsque n = 4, R₁ signifie -(CH₂)₄C.

5. Procédé selon la revendication 1, caractérisé en ce que l'anti-oxydant est un composé de formule III : 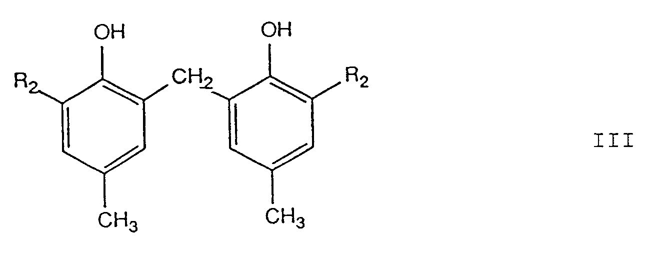 dans laquelle R₂ signifie l'hydrogène, le méthyle ou le tert.-butyle.

6. Procédé selon la revendication 5, où R₂ signifie le tert.-butyle.

7. Procédé selon la revendication 1, caractérisé en ce que l'anti-oxydant est un composé de formule IV : 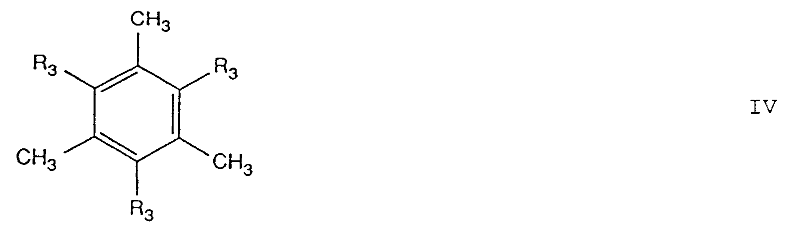 où R₃ représente un groupe

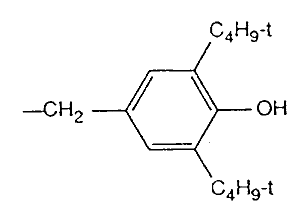

8. Procédé selon la revendication 1, caractérisé en ce que l'anti-oxydant est un composé de formule V : 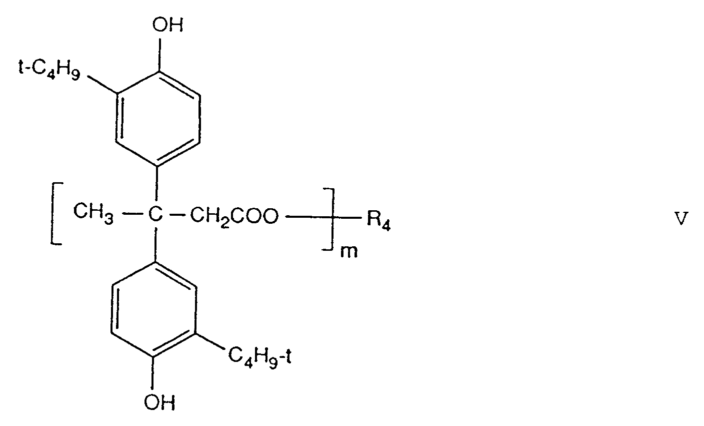 dans laquelle soit m vaut 1 et R₄ est le méthyle, soit m vaut 2 et R₄ signifie -CH₂CH₂-.

9. Procédé selon la revendication 1, caractérisé en ce que l'anti-oxydant est un composé de formule VI : 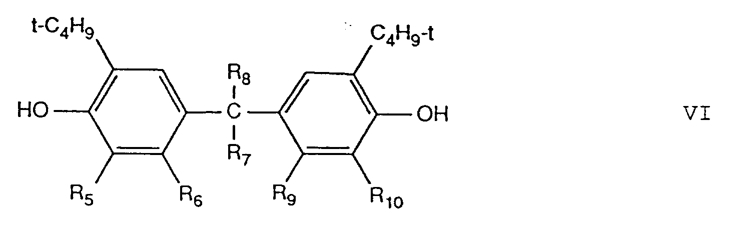 dans laquelle R₅ et R₁₀ sont l'hydrogène ou le tert.-butyle, R₆ et R₉ sont l'hydrogène ou le méthyle, R₇ est l'hydrogène ou le méthyle et R₈ est l'hydrogène ou un alkyle en C₁-C₄.

10. Procédé selon la revendication 1, caractérisé en ce que l'anti-oxydant est le 3,5-di-tert.-butyl-4-hydroxytoluène.

11. Procédé selon la revendication 1, caractérisé en ce que la couche d'enduit primaire contient un liant et/ou un liquide à haut point d'ébullition.

12. Procédé selon la revendication 1, caractérisé en ce que la couche d'enduit primaire contient un ester de l'acide phosphoreux.

13. Procédé selon la revendication 12, caractérisé en ce que la couche d'enduit primaire contient le phosphite de tris-(2,4-di-tert.-butylphényle).

14. Procédé selon la revendication 1, caractérisé en ce que la couche d'enduit primaire contient un agent de conservation.

15. Procédé selon la revendication 1, caractérisé en ce que le vernis de finition est un vernis transparent.

16. Procédé selon la revendication 1, caractérisé en ce que le vernis de finition contient un liant à base d'une résine alkyde.

17. Procédé selon la revendication 1, caractérisé en ce que le vernis de finition contient un ou plusieurs agents protecteurs contre la lumière.

18. Procédé selon la revendication 17, caractérisé en ce que le vernis de finition contient un absorbeur d'UV et une amine à encombrement stérique en tant qu'agent protecteur contre la lumière.

19. Couche de protection pour le bois composée de :
a) une couche d'enduit primaire pénétrant la surface du bois qui ne contient pas d'agent protecteur contre la lumière, et
b) une ou plusieurs couches de finition,
caractérisée en ce que la couche d'enduit primaire contient au moins de 0,05 à 10 % en poids d'un anti-oxydant qui contient au moins un groupe de formule I.

20. Couche de protection pour le bois selon la revendication 10, caractérisée en ce que la couche d'enduit primaire est une solution d'un anti-oxydant de type phénol dans un solvant organique.
